# EUROPÄISCHE PATENTANMELDUNG

(11) **EP 0 988 886 A2**
(43) Veröffentlichungstag der Anmeldung: **29.03.2000**
(21) Anmeldenummer: 99117296.6
(22) Anmeldetag: 02.09.1999
(51) Int. Cl.: B01F 5/06

(54) **Kompakter Kreuzkanalmischer**

(30) Priorität: 25.09.1998 DE 19844075
(71) Anmelder: MAN Nutzfahrzeuge Aktiengesellschaft, 80995 München (DE)
(72) Erfinder: Döring, Andreas, Dipl.-Ing., 90403 Nürnberg (DE)

(57) **Zusammenfassung**

Die Erfindung bezieht sich auf einen kompakten Kreuzkanalmischer. Zur Homogenisierung, insbesondere von Mischungen aus Abgas und Reduktionsmittelpartikeln, über den gesamten Querschnitt von Rohrleitungen verwendet man sogenannte Kreuzkanalmischer, welche aus mehreren übereinandergeschichteten Folien gebildet werden. Um eine Durchmischung in zwei unter 90° zueinander stehenden Ebenen zu erreichen sind zwei in Reihe geschaltete Mischelemente erforderlich. Erfindungsgemäß wird eine vollständige Durchmischung mit einem Mischelement erzielt, indem man die zu einem Mischelement zusammengefügten Folien 2 um die Hauptströmungsrichtung dreht. Durch diese Drehung wird eine Durchmischung, beispielsweise von Abgas und Harnstoffpartikeln vor dem Eintritt in einen Katalysator zur Reduktion von NOx erzielt. Man spart das in Reihe geschaltete zweite Mischelement und spart neben Kosten auch wertvollen Bauraum.

## Beschreibung

Die Erfindung bezieht sich auf einen kompakten Kreuzkanalmischer gemäß dem Gattungsbegriff des Patentanspruches 1.

Aus WO 91/16 970 ist ein Kreuzkanalmischer bekannt, bei dem jedes Mischelement aus einem Folienpaket aufgebaut ist. Die Folien weisen eine Profilierung auf, so daß sich beim Aufeinanderschichten Strömungskanäle bilden. Diese Strömungskanäle sind beim Aufeinanderschichten gekreuzt. Beim Durchströmen von Gemischen aus Fluiden und Feststoffen erfolgt eine Homogenisierung in der Schichtebene. Um nun aber eine Durchmischung in radialer und Umfangsrichtung zu erreichen werden mehrere, mindestens aber zwei dieser gleichartig aufgebauten Mischelemente so übereinander gestapelt, daß ihre Schichtebenen gegeneinander, z.B. um 90° verdreht sind. Ein derartiger Mischer ist wegen zwei oder mehrerer in Reihe geschalteter Mischelemente nicht nur teuer, sondern beansprucht auch viel Bauvolumen, was aber z.B. bei Einbau in Abgasanlagen von Kraftfahrzeugen Probleme mit Rücksicht auf den zur Verfügung stehenden Bauraum aufwirft.

Demgegenüber liegt der Erfindung die Aufgabe zugrunde, einen Kreuzkanalmischer zu entwickeln der nur aus einem Mischelement besteht und dennoch zu einer guten Homogenisierung über den gesamten Querschnitt führt.

Gelöst wird diese Aufgabe durch die kennzeichnenden Merkmale des Patentanspruches 1.

Durch die Drehung der aufeinander liegenden Folien um die Hauptströmungsrichtung wird eine gute Mischung in radialer Richtung und in der Umfangsrichtung realisiert, ohne daß zwei oder mehrere Mischelemente aufeinander gestapelt werden müssen.

Nach Anspruch 2 ist es vorteilhaft die Neigung der Strömungskanäle zu variieren, um die Verarbeitung der Folien zu erleichtern, da diese beim Walzen bei stärkerer Neigung die Tendenz zeigen seiflich auszuweichen.

Eine vorteilhafte Drehung kann Anspruch 3 entnommen werden. In der Umgebung der Achse des Mischelements aufgebrachte inhomogene Fluid-Feststoff/Gemische werden über die ganze Querschnittsfläche verteilt und homogenisiert. Zudem wird durch die Drehung der Mischungsweg vergrößert.

Eine weitere vorteilhafte Gestaltung der Strömungskanäle ist Anspruch 4 zu entnehmen. Durch die Schlitze wird eine Verbesserung der radialen Durchmischung erreicht.

Gemäß Anspruch 5 kann durch die Beschichtung der Folien mit einem Katalysator eine Aktivierung der chemischen Reaktionen erzielt werden.

Der Aufbau eines erfindungsgemäßen kompakten Kreuzkanalmischers und ein Ausführungsbeispiel für eine Drehung zur Hauptströmungsrichtung ist an Hand von Zeichnungen erläutert. Es zeigt:
- Fig. 1: eine Draufsicht auf einen zylindrischen Kreuzkanalmischer
- Fig. 2: einen Schnitt II-II mit den über Kreuz angeordneten Strömungskanälen
- Fig. 3: einen erfindungsgemäßen Kreuzkanalmischer mit S-förmig gedrehten Folien
- Fig. 4: eine Draufsicht auf eine Folie mit variabler Neigung der Strömungskanäle
- Fig. 5: eine Folie nach Fig. 4 bei der die Wellenberge der Strömungskanäle geschlitzt sind.

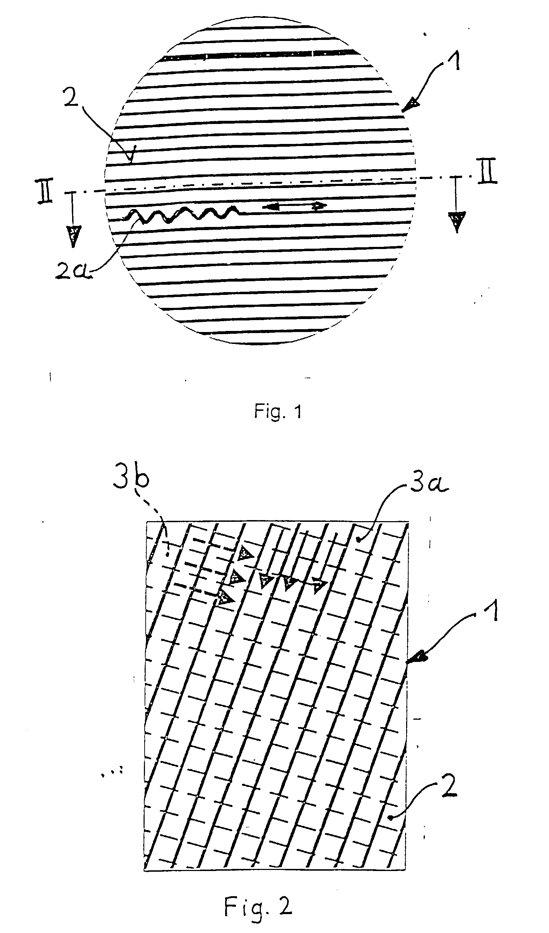

Fig. 1 zeigt in Hauptströmungsrichtung gesehen ein zylindrisch gestaltetes Mischelement 1, welches dem bekannten Stand der Technik entsprechend als Kreuzkanalmischer mit aufeinandergeschichteten Folien 2 aufgebaut ist. Die Folien sind beispielsweise sinusförmig gewellt, so daß Strömungskanäle gebildet werden, wenn die Folien 2 zu einem Paket aufeinandergestapelt werden. Die wellenförmige Struktur ist an Hand einer Folie 2a angedeutet. Um eine Durchmischung in Richtung der Ebenen der Folien 2 zu erreichen werden die Strömungskanäle zweier aufeinanderliegender Folien gekreuzt, wie aus Fig. 2 zu ersehen ist. Das in Fig. 1 gezeigte Mischelement 1 kann also nur eine Mischung in Richtung der Folien 2 vornehmen wie dies durch einen Pfeil angedeutet ist.. Soll jedoch eine Mischung auch in anderen Richtungen erfolgen, so daß eine Durchmischung über die gesamte Querschnittsebene erfolgt, so müssen mindestens zwei solcher Mischelemente 1 um 90° zueinander verdreht in Reihe geschaltet werden, was natürlich einen hohen Preis und hohes Bauvolumen zur Folge hat.

In Fig. 2 ist im Schnitt II-II eine Folie 2 mit Strömungskanälen 3a und eine darunter liegende, gestrichelt gezeichnete Folie mit Strömungskanälen 3b dargestellt. Die Strömungskanäle sind in bekannter Art über Kreuz angeordnet, so daß eine Durchmischung in der Ebene der Folien erfolgt.

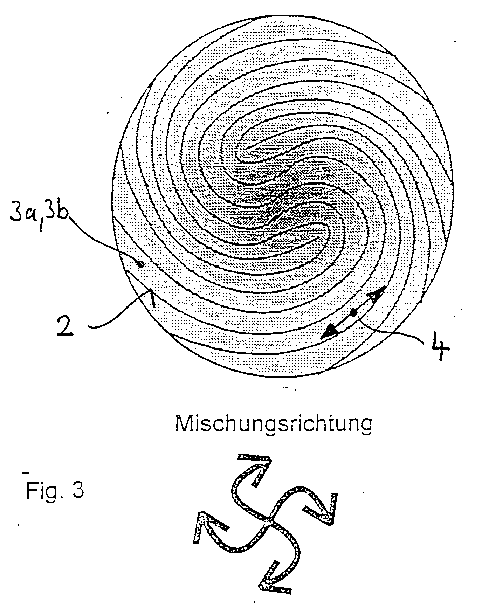

In Fig. 3 ist der allgemeine Erfindungsgedanke an Hand eines Ausführungsbeispieles dargestellt. Das Mischelement 1 ist wieder aus Folien 2 aufgebaut, welche eine wellenförmige Struktur aufweisen können, wie sie in den Figuren 1 und 2 gezeigt ist. Der Zwischenraum aufeinander liegender Folien bildet Strömungskanäle 3a, 3b die kreuzförmig übereinander liegen, wie dies deutlich aus Fig. 2 zu ersehen ist. Erfindungsgemäß sind nun diese Strömungskanäle 3a, 3b bildenden Folien 2 um die Hauptströmungsrichtung gedreht (im gezeigten Beispiel S-förmig). Durch diese Drehung wird die planare Mischungsebene, wie sie in Punkt 4 durch die Pfeile angedeutet ist, gekrümmt, so daß eine Durchmischung nunmehr auch radial erfolgt, ohne daß ein zweites Mischelement in Reihe geschaltet werden muß, wie dies nach dem Stand der Technik erforderlich ist. Das erfindungsgemäße Mischelement spart somit erheblich Bauvolumen und Kosten.

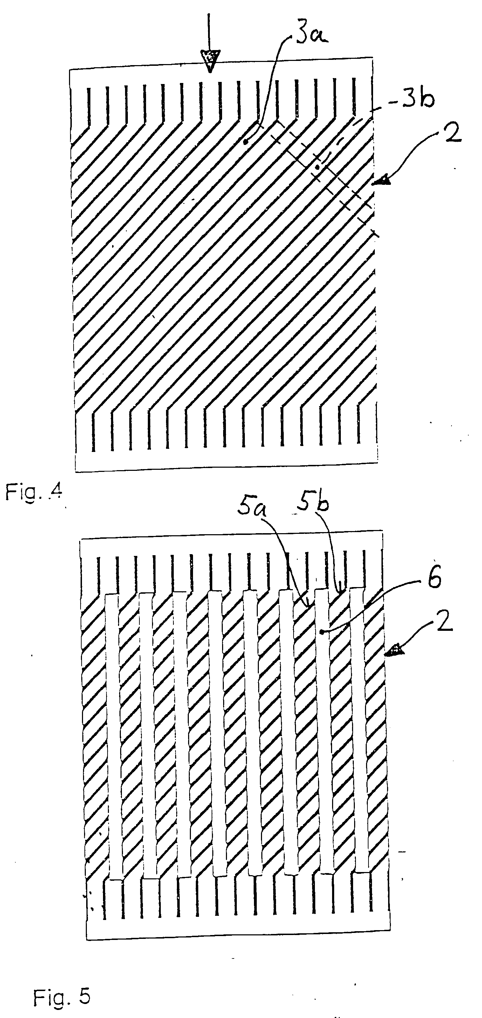

Eine Verbesserung der radialen Durchmischung kann durch das Schlitzen der Strömungskanäle 3a, 3b erreicht werden, wie an Hand der Figuren 4 und 5 erläutert wird.

Fig. 4 stellt in der Ansicht eine Folie 2 dar, die in der durch Pfeil angedeuteten Hauptströmungsrichtung angeströmt wird. Die Strömung wird in Richtung der Strömungskanäle 3a umgelenkt. In der darunter liegenden Folie erfolgt Umlenkung in Richtung der Strömungskanäle 3b die gestrichelt angedeutet sind. Die Neigung der Kanäle 3a, 3b kann variiert werden, um die Verarbeitung zu erleichtern. Bei starker Neigung versuchen die Folien 2 beim Walzvorgang auszuweichen, was bei der erwünschten geringen Dicke der Folien 2 nur schwer beherrschbar ist. Eine Verdickung der Folien 2 erhöht aber Kosten und Bauvolumen.

Wenn nun nach Fig. 5 in die Folie 2 Schlitze 6 eingearbeitet werden, so werden die repräsentativ herausgegriffenen und mit 5a, 5b bezeichneten Wellenberge durchschnitten und es kann senkrecht zur Zeichenebene ein Stoffaustausch mit den Strömungskanälen der darunter liegenden Ebene erfolgen, so daß die in Fig. 3 beschriebene radiale Durchmischung noch intensiviert wird.

Eine weitere Verbesserung kann durch eine Beschichtung der Folien 2 mit einem Katalysator erreicht werden. Dadurch wird die Funktion einer chemischen Umsetzung in den Mischer integriert.

Der erfindungsgemäße kompakte Kreuzkanalmischer erlaubt somit eine Homogenisierung eines Gemisches über den gesamten Querschnitt bei Kleinem Bauvolumen und geringem baulichen Aufwand und daraus resultierenden finanziellen Aufwand.

## Patentansprüche

1. Kompakter Kreuzkanalmischer, bestehend aus mehreren übereinander geschichteten Folien, wobei die Folien durch besondere Formgebung, z.B. sinusförmige Wellung Strömungskanäle bilden und die Strömungskanäle aufeinanderliegender Folien zueinander gekreuzt sind, dadurch gekennzeichnet, daß die zu einem Mischelement zusammengefügten Folien (2) um die Hauptströmungsrichtung gedreht sind.

2. Kreuzkanalmischer nach Anspruch 1, dadurch gekennzeichnet, daß die Neigung der Strömungskanäle (3a, 3b) variabel ist.

3. Kreuzkanalmischer nach den Ansprüchen 1, 2, dadurch gekennzeichnet, daß die Folien (2) um die Hauptströmungsrichtung S-förmig gedreht sind.

4. Kreuzkanalmischer nach den Ansprüchen 1 bis 3, dadurch gekennzeichnet, daß die Wellenberge ( 5a, 5b ) der aufeinandergeschichteten Folien 2, welche die Strömungskanäle (3a, 3b) bilden winkelig zu ihrer Hauptrichtung mit Schlitzen (6) versehen sind.

5. Kreuzkanalmischer nach den Ansprüchen 1 bis 4, dadurch gekennzeichnet, daß die Folien (2) mit einem Katalysator beschichtet sind.
